# EUROPÄISCHE PATENTSCHRIFT

(11) **EP 2 283 096 B1**
(45) Veröffentlichungstag und Bekanntmachung des Hinweises auf die Patenterteilung: **02.05.2018**
(21) Anmeldenummer: 09753954.8
(22) Anmeldetag: 29.05.2009
(51) Int. Cl.: C09J 5/06, B32B 7/12, B32B 15/04, C22C 1/00

(54) **VERFAHREN ZUR HERSTELLUNG EINER BLECHSTRUKTUR AUS MITEINANDER VERKLEBTEN BAUTEILEN**
METHOD FOR PRODUCING A SHEET METAL STRUCTURE OF COMPONENTS WHICH ARE GLUED TOGETHER
PROCÉDÉ DE FABRICATION D'UNE STRUCTURE EN TÔLE CONSTITUÉE D'ÉLÉMENTS COLLÉS

(30) Priorität: 30.05.2008 DE 102008026613
(43) Veröffentlichungstag der Anmeldung: 16.02.2011
(73) Patentinhaber: Fraunhofer-Gesellschaft zur Förderung der angewandten Forschung e.V., 80686 München (DE)
(72) Erfinder: PESCHKA, Manfred, 52066 Aachen (DE); LÜHRING, Andreas, 26180 Rastede (DE); HARTWIG, Andreas, 27721 Ritterhude (DE)
(74) Vertreter: Grundmann, Dirk
(86) Internationale Anmeldenummer: PCT/EP2009/056610
(87) Internationale Veröffentlichungsnummer: WO 2009/144299

(56) Entgegenhaltungen:
- EP-A- 0 016 247
- DE-A1- 19 919 783
- US-A- 4 490 505

## Beschreibung

Die Erfindung betrifft ein Verfahren zur Herstellung einer Blechstruktur aus mindestens zwei miteinander verbundenen Blechen, gemäß Anspruch 1 wobei zumindest eines der Bleche mit einem mindestens ein Reaktivpolymer und einen Härter beinhaltenden Klebstoff beschichtet wird, danach die beiden Bleche zusammengelegt und aneinander fixiert werden, anschließend gemeinsam plastisch umgeformt werden und erst daran anschließend der die beiden Bleche miteinander verbin-dende Klebstoff endgültig ausgehärtet wird.

Die DE 199 19 783 A1 beschreibt ein Herstellungsverfahren für ein durch Tiefziehen umgeformtes zweilagiges Blechverbundteil. Dabei werden die Anlageflächen der einzelnen Blechteile zunächst einseitig mit einem Klebstoff beschichtet. Der Klebstoff ist ein durch gezielte Wärmezufuhr aushärtbarer Klebstoff. In einem zweiten Verfahrensschritt werden die Blechteile mit dem noch nicht ausgehärteten Klebstoff durch eine Wärmebeaufschlagung miteinander verbunden, bei der sich der Klebstoff lediglich teilvernetzt und lediglich teilausgehärtet wird. In einem dritten Verfahrensschritt werden die derart aneinander fixierten Blechverbundteile gemeinsam umgeformt. In einem sich daran anschließenden letzten Verfahrensschritt werden die umgeformten und aneinander haftenden Blechteile ausgeheizt, bis der Klebstoff vollständig vernetzt ist. Als Klebstoff werden Epox-Hotmelt-Klebstoffe genannt, die einen reaktiven Klebstoff darstellen.

Die EP 0 636 517 B1 beschreibt ein Verfahren zum Herstellen einer Doppelblechstruktur mit zwischen den Blechen angeordneter Dämmschicht. Die beiden Bleche werden unter Zwischenlage der Dämmschicht zunächst aneinander fixiert, wobei lediglich auf ausgewählte Flächenabschnitte ein Dämmschichtmaterial aufgelegt wird. Das Dämmschichtmaterial wird mit dem Grundblech und dem Deckblech verklebt. Das Auftragen der Verklebung erfolgt durch Aufwalzen, Rollen, Sprühen oder in Form einer Folie. Ein endgültiges Aushärten über die gesamte Klebefläche soll in einer späteren Wärmebehandlung erfolgen.

Die DE 101 20121 A1 beschreibt eine zu einem Formbauteil umformbare Blechplatine, die bereichsweise verstärkt ist. Hierzu ist auf ein Basisblech vollflächig ein Verstärkungsblech aufgeklebt. Als Klebstoff wird ein bei erhöhter Temperatur aushärtender Klebstoff verwendet. Das Verstärkungsblech ist an seinem umlaufenden Rand lückenlos mit einem bei niedrigeren Temperaturen als die Aushärtetemperatur des vollflächig aufgetragenen Klebstoffes aushärtenden Klebstoff mit dem Basisblech fest verbunden. Hierdurch wird ein dichter eingeschlossener Raum gebildet. Für den bei den niedrigeren Temperaturen aushärtenden Klebstoff, mit dem lediglich der Rand des Verstärkungsblechs am Basisblech fixiert ist, wird ein Dispersionsklebstoff, ein Schmelzklebstoff oder ein Kontaktklebstoff vorgeschlagen.

Die EP 1 568 749 A1 beschreibt ein Sandwich-Verbundwerkstoff bestehend aus zwei miteinander verklebten und umgeformten Substraten, wobei der Klebstoff aus zwei Komponenten zusammengemischt ist.

Die DE 10135 647 C1 beschreibt ein Verfahren zur Herstellung eines Blechumformteiles. Das Blechumformteil wird vor dem Umformen insbesondere in Bereichen, die verformt werden sollen, mit einem Verstärkungsblech versehen. Die Verbindung der beiden Blechbauteile erfolgt unter Zwischenlage einer Klebstoffschicht. Die beiden aufeinander zu weisenden Klebeflächen der beiden Blechbauteile sind durch die Klebstoffschicht voneinander getrennt. Anschließend wird der so gefertigte Verbundkörper plastisch umgeformt.

Aus der EP 0 016 247 ist es bekannt, Klebstoffe als eine wässrige Dispersion aufzubringen.

Der Erfindung liegt die Aufgabe zugrunde, das Verfahren zur Herstellung von verformten Blechverbundbauteilen zu verbessern und ein hierzu geeignetes Halbzeug anzugeben.

Gelöst wird die Aufgabe durch das im Anspruch 1 angegebene Verfahren.

Zunächst und im Wesentlichen wird vorgeschlagen, dass der Klebstoff ein thermisch aktivierbarer, im reaktiven Zustand bei 20°C fester und klebfreier Klebstoff ist. Diese Klebstoffschicht wird durch Auftragen einer wässrigen Polymerdispersion und anschließendes Trocknen erhalten und wird erst nach dem Umformschritt durch Erwärmen endgültig ausgehärtet, kann aber über die verschiedenen Stufen der Verarbeitung ein- oder mehrfach thermoplastisch erweicht und damit in einen klebrigen Zustand gebracht werden. Es ist somit eine zeitliche und/oder räumliche Trennung der Einzelfunktionen gegeben. Die Applikation des Klebstoffs auf einem der beiden Bauteile erfolgt in einem ersten Verfahrensschritt. Dabei ist es von Vorteil, wenn ein Klebstoff verwendet wird, der nach der Applikation erstarrt, so dass er keine klebrige Oberfläche mehr besitzt. Das Erstarren erfolgt durch Trocknung in dem das Wasser verdampft wird. Der nach dem Verdampfen zurückbleibende Klebstoff ist tackfrei. Die Beschichtung kann durch Spritzen, Kalandrieren, Rakeln, mit dem Pinsel oder mit einer Breitschlitzdüse erfolgen. Durch eine geeignete Verdünnung oder durch Zugabe eine tixotropen Zusatzstoffes kann die
der nach der Applikation erstarrt, so dass er keine klebrige Oberfläche mehr besitzt. Das Erstarren erfolgt durch Trocknung in dem das Wasser verdampft wird. Der nach dem Verdampfen zurückbleibende Klebstoff ist tackfrei. Die Beschichtung kann durch Spritzen, Kalandrieren, Rakeln, mit dem Pinsel oder mit einer Breitschlitzdüse erfolgen. Durch eine geeignete Verdünnung oder durch Zugabe eine tixotropen Zusatzstoffes kann die
Fließfähigkeit der Dispersion auf die gewünschte Applikationsmethode eingestellt werden. Dieser Klebstoff kann ein Zweikomponentenklebstoff sein, der insbesondere aus einer Epoxydharz-Komponente und einem Härter besteht. Die Epoxydharz-Komponente kann einen Erweichungspunkt von > 50° C besitzen und darüber hinaus metallische, mineralische oder polymere Füllstoffe sowie feste oder flüssige Flexibilisatoren, Zähmodifizierer oder Verlaufsadditive enthalten. Der Härter besteht bevorzugt aus einer oder mehreren der Härtung dienenden Substanzen, die bei Temperaturen im Bereich von 80° C bis 200° C mit den Epoxydharzen der zuvor benannten Komponente eine chemische Härtungsreaktion eingehen. Diese Temperatur entspricht der Aktivierungstemperatur bzw. der Reaktionstemperatur der beiden Komponenten, also der Temperatur, die erreicht werden muss, damit eine chemische Reaktion zwischen Härter und Epoxyharz stattfindet. Diese Aktivierungstemperatur bzw. Reaktionstemperatur soll oberhalb der Erweichungstemperatur der Komponentenmischung liegen. Bei der Erweichungstemperatur findet lediglich ein "Wechsel des Aggregatszustandes" statt. Die Härterkomponente kann in fester oder flüssiger Form vorliegen und wird mit der wässrigen Harzdispersion gemischt, sofern sie nicht bereits Bestandteil der Dispersion ist. Auch die Härterkomponente kann zusätzlich metallische, mineralische oder polymere Füllstoffe sowie feste oder flüssige Flexibilisatoren, Zähmodifizierer oder Verlaufsadditive enthalten. Bei den Epoxydharzen kann es sich sowohl um aliphatische, cycloaliphatische oder aromatische Epoxydharze handeln. Aliphatische Epoxydharze beinhalten Komponenten, die sowohl eine aliphatische Gruppe, als auch mindestens zwei Epoxydharzgruppen tragen. Beispiele für aliphatische Epoxydharze können sein Butandioldiglycidylether, Hexandioldiglycidylether, Dimethylpentandioxid, Butandiendioxid, Diethylenglycoldiglycidylether. Als Reaktivpolymer kommt bevorzugt ein bei 20 °C festes Epoxydharz insbesondere ein epoxydiertes Phenolharz oder ein Bisphenol-A-diglycidylether oder ein festes reaktives Polyurethan in Betracht. Als Härter kommt bevorzugt Dicyandiamin, ein Imidazol, ein Aziridin oder ein verblocktes Isocyanat in Betracht.

Die erste Komponente besteht aus einem oder mehreren Epoxidharzen mit mehr als einer Epoxidgruppe, von denen mindestens eines einen Erweichungspunkt > 50°C besitzt. Die erste Komponente kann außerdem metallische, mineralische oder polymere Füllstoffe sowie feste oder flüssige Flexibilisatoren, Zähmodifizierer oder Verlaufsadditive enthalten.

Bei den Epoxidharzen kann es sich sowohl um aliphatische, cycloaliphatische oder aromatische Epoxidharze handeln. Aliphatische Epoxidharze beinhalten Komponenten, die sowohl eine aliphatische Gruppe als auch mindestens zwei Epoxidharzgruppen tragen.

Beispiele für aliphatische Epoxidharze können sein Butandioldiglycidylether, Hexan-dioldiglycidylether, Dimethylpentandioxid, Butadiendioxid, Diethylenglycoldiglycidylether.

Cycloaliphatische Epoxidharze sind bspw. 3-Cyclohexenylmethyl-3-cyclo-hexylcarboxylatdiepoxid, 3,4-Epoxycyclohexylalkyl-3',4'-Epoxycyclohexancarboxylat, 3,4-Epoxy-6-methylcyclohexylmethyl-3',4'-epoxy-6-methylcyclohexancarboxylat, Vinylcyclohexandioxid, Bis(3,4-Epoxycyclohexylmethyl)adipat, Dicyclopentadiendioxid, 1,2-epoxy-6-(2,3-epoxypropoxy)hexahydro-4,7-methanoindan.

Aromatische Epoxidharze sind bspw. Bisphenol-A-Epoxidharze, Bisphenol-F-Epoxidharze, Phenol- Novolac- Epoxidharze, Cresol-Novolac-Epoxidharze, Biphenylepoxidharze, Biphenolepoxidharze, 4,4'-BiphenylEpoxidharze, Divinylbenzoldioxid, 2- Glycidylphenylglycidylether, Tetraglycidylmethylendianilin.

Auch polyfunktionelle Epoxidharze aller drei Harzgruppen, zähelastifizierte Epoxidharze sowie Gemische verschiedener Harze können jederzeit eingesetzt werden.

Die zweite Komponente besteht aus einer oder mehreren der Härtung dienenden Substanzen die bei Temperaturen im Bereich von 80°C bis 200°C mit den Epoxidharzen der ersten Komponente des Klebstoffs Härtungsreaktionen eingehen. Diese Substanzen können in fester oder flüssiger Form vorliegen und werden in die wässrige Dispersion eingebracht.

Die beiden Komponenten können zusätzlich metallische, mineralische oder polymere Füllstoffe sowie feste oder flüssige Flexibilisatoren, Zähmodifizierer oder Verlaufsadditive enthalten.

Die zur Härtung dienende zweite Komponente enthält Aziridinderivate, Triazinderivate, Imidazoline, Imidazole, o-Tolylbiguanid, cyclische Amidine, organische Hexafluoroantimonat oder Hexafluorophosphat-Verbindungen. Die Verbindungen können einzeln oder in Kombination eingesetzt werden.

Beispiele für geeignete Stoffe für die zur Härtung dienende Komponente sind 2-Methylimidazol, 2-Undecylimidazol, 2-Heptadecylimidazol, 1,2-Dimethylimidazol, 2-Ethyl-4-methylimidazol, 2-Phenylimidazol, 2-Phenyl-4-metylimidazol, 1-Benzyl-2-metylimidazoi, 1 -Benzyl-2-phenylimidazol, 1-Cyanoethyl-2-metylimidazol, 1-Cyanoethyl-2-undecylimidazol, 1-Cyanoethyl-2-ethyl-4-metylimidazol, 1-Cyanoethyl-2-phenylimidazol, 1-cyanomethyl-2-undecylimidazolium-trimellitat, 1-Cyanoethyl-2-phenylimidazolium-trimellitat, 2,4™Diamino-6-[2'-methylimidazolyl-(1')]-ethyl-s-triazin, 2,4-Diamino-6-[2'-undecylimidazolyl-(1')]-ethyl-s-triazin, 2,4-Diamino-6-[2'-ethyl-4'-methylimidazolyl-(1')]-ethyl-s-2,4-diamino-6-[2,4-methylimidazolyl-(1')]-ethyl-s-triazin, 2-Phenylimidazol, 2-Phenyl-4,5-dihydroxymetylimidazol, 2-Phenyl-4-methyl-5-hydroxymethylimidazol, 2,3-Dihydro-1H-pyrrolo[1,2-a]benzimidazol, 1-Dodecyl-2-methyl-34)enzylimidazolium-chlorid, 2-Methylimidazolin, 2-Phenylimidazolin, 2,4-Diamino-6-vinyl-1,3,5-triazin, 2,4-Diamino-6-vinyl-1,3,5-triazin Isocyansäure-addukt, 2,4-Diamino-6-methacryloyloxyethyl-1,3,5-triazin, 2,4-Diamino-6-methacryloyloxyethyl-1,3,5-triazine Isocyansäure-addukt, 1,3,5-Triazine, 2,4-Diamino-6-methyl-1,3,5-triazin, 2,4-Diamino-6-nonyl-1,3,5-triazin, 2,4-Diamino-6-phenyl-1,3,5-triazin, 2,4-Dimethoxy-6-methyl-1,3,5-triazin, 2,4-Dimethoxy-6-phenyl-1,3,5-triazin, 2-Amino-4,6-dimethyl-1,3,5-triazin, 2-Amino-4-dimethylamino-6-methyl-1,3,5-triazin, 2-Amino-4-ethoxy-6-methyl-1,3,5-triazin, 2-Amino-4-ethyi-6-methoxy-1,3,5-triazin, 2-Amino-4-methoxy-6-methyl-1,3,5-triazin, 2-Amino-4-methyl-6-phenyl-1,3,5-triazin, 2-Chloro-4,6-dimethoxy-1,3,5-triazin, 2-Ethyiamino-4-methoxy-6-methyl-1,3,5-triazin, 1-o-Tolylbiguanid.

Als Zähmodifikatoren geeignet sind beispielsweise carboxylterminiertes Butadien-Acrylnitril-Flüssigkautschuk, aminterminiertes Butadien-Acrylnitril-Flüssigkautschuk, mit Maleinsäure behandeltes Polybutadien oder Butadien-Styrol-Copolymer, hydroxylfunktionelle Polybutadien Oligomere, epoxyterminierte Urethane-prepolymere, epoxytermininierte Polysulfide, epoxidiertes Polybutadien oder Polyglycoldiepoxid. Besonders bevorzugte Zähmodifizierer sind beispielsweise carboxylterminiertes Butadien-Acrylnitril-Flüssigkautschuke (CTBN), die in flüssiger Form unter dem Namen Hypro von der Firma Emerald Performance Materials LLC angeboten werden. Diese haben Molekulargewichte zwischen etwa 2000 und etwa 5000 und Acrylnitril-Gehalte zwischen etwa 10 Gew.-% und etwa 30 Gew.-%. Konkrete Beispiele sind Hypro CBTN 1300 X8, 1300 X13 oder 1300 X15.

Weiterhin können als Zähmodifizierer auch Core-Shell-Partikel (z.B. Genioperl® der Firma Wacker), thermoplastische Silikonelastomere (z.B. Geniomer® von Wacker), Elastomere sowie Siloxane und Polyether mit funktionellen Gruppen verwendet werden. Als Zähmodifikatoren können auch Nanopartikel eingesetzt werden. Die Zähmodifikatoren können sowohl einzeln als auch in Kombination eingesetzt werden.

Als Füllstoffe können zum Beispiel Calciumcarbonat, Siliciumdioxid, Aluminiumoxid, Aluminiumhydroxid, Aluminiumpulver, Talkum, Kaolin, Bariumsulfat, Calciumsulfat, Polymerpulver, Glashohlkugeln, Ruß, Feldspat, Glimmer oder Quarz eingesetzt werden.

Die einzelnen Komponenten sind bei Temperaturen im Bereich von -20 bis 50°C mehrere Monate Lagerstabil und härten auch bei mehrstündiger Erwärmung auf Temperaturen von bis zu 80°C nicht aus.

Die Klebstoffkomponenten sind so ausgewählt, dass bei ihrer Mischung Temperaturen im Bereich von 50 bis 80°C gewählt werden können ohne dass es zu einer Aushärtung des Klebstoffes durch den Mischprozess kommt. Der applizierte Klebstoff ist bei Raumtemperatur mehrere Monate lagerstabil und kann später durch eine Erwärmung auf Temperaturen von über 100°C innerhalb weniger Sekunden bis hin zu einigen Minuten ausgehärtet werden.

Eine fließfähige, pastöse oder flüssige Mischung der beiden in Wasser dispergierten oder gelösten Komponenten wird bei einer Temperatur, welche unter der Aktivierungstemperatur liegt, auf die Klebefläche eines Blechbauteils aufgebracht. Es kann sich dabei um ein bereits ausgestanztes Blechbauteil handeln. Die Schicht trocknet dann. Sie ist in diesem Zustand durch Erwärmen erweichbar und durch Erwärmen über die Aktivierungstemperatur aushärtbar. Im trocknen Zustand besitzt die Schicht eine im Wesentlichen passive Oberfläche, so dass auf die erstarrte Klebeschicht weitere Bauteile gestapelt werden können, ohne dass diese miteinander verkleben.

Eine besonders bevorzugte Klebstoffvariante beruht auf wässrigen Epoxidharzdispersionen. Diese enthalten im wesentlichen die bereits vorbenannten Stoffe, also mindestens je ein bei Raumtemperatur festes Epoxidharz und Härter, sowie optional Flexibilisatoren, Füllstoffe, Stabilisatoren und die anderen nach dem Stand der Technik in Klebstoffen üblichen Formulierbestandteile.

Die wässrige Dispersion wird zur Applikation gegebenenfalls mit Wasser soweit verdünnt, dass sie durch Sprühen, Streichen, Kalandrieren und andere bekannte Auftragsverfahren in der gewünschten Schichtdicke auf das vorzubeschichtende Blech aufgetragen werden kann. Nach der Applikation wird das Wasser verdampft und es bleibt eine bei 20°C trockene und klebfreie Klebstoffschicht zurück, welche thermisch aktivierbar ist. Wenn diese Aktivierung für nur wenige Sekunden bis Minuten bei Temperaturen erfolgt bei denen der Klebstoff gerade eine klebrige Oberfläche bekommt, kann eine Haftklebverbindung mit einem weiteren Fügeteil erzeugt werden. Diese Verbindung ist optional auch wieder bei der Fügetemperatur lösbar. Die eigentliche Aushärtung erfolgt durch chemische Reaktion des Epoxidharzes mit dem Härter. Dies erfolgt bei höherer Temperatur.

Thermisch aktivierbare Polyurethandispersionen stellen eine weitere Basis für die zur Vorapplikation geeigneten Klebstoffe dar. Derartige Dispersionen sind nach dem Stand der Technik bekannt und bilden nach dem Trocknen eine trockene Klebstoffschicht, insbesondere wenn sie auf Basis teilkristalliner Polyesterpolyole hergestellt wurden. Bei der thermischen Aktivierung werden Isocyanatgruppen freigesetzt, welche zur dauerhaften Aushärtung des Klebstoffes führen.

In wässriger Dispersion liegen die Komponenten hingegen separiert voneinander als dispergierte Teilchen vor, was eine besonders gute Lagerstabilität der Zubereitung zur Folge hat.

Nachdem das Blech mit dem thermisch aktivierbaren und reaktivem Klebstoff, bei 20°C aber tackfreien Klebstoff vorbeschichtet wurden, wird in einem zeitlich und/oder räumlich nachfolgenden Prozessschritt das Bauteil, welches mit einer derartigen Klebeschicht versehen ist, auf einer Gegenklebefläche des anderen Bauteils, bei welchem es sich um ein Grundblech (eine Platine) handeln kann, fixiert. Mindestens eines der Bleche ist mit der Klebstoffschicht vorbeschichtet und es werden mindestens zwei Bleche miteinander verbunden. Eine bevorzugte Ausführungsform ist die Vorbeschichtung beider Bleche mit dem Klebstoff, wobei die Klebschichten aufeinander gelegt werden. Die Fixierung erfolgt lediglich punktuell und insbesondere dort, wo beim Umformen eine minimale Relativbewegung der beiden Bauteile erfolgt. Die Fixierung kann über lokale insbesondere punktuelle Erwärmung und anschließende Aushärtung der Klebstoffschicht erfolgen. Bevorzugt erfolgt die Fixierung aber über eine Formschlussverbindung bzw. einen Schweißpunkt. Als Formschlussverbindung kommt bevorzugt eine Clinch-Verbindung in Betracht. Der Schweißpunkt wird bevorzugt im Wege des Widerstands-Punktschweißens erzeugt. Es ist aber auch möglich die Fixierung so auszuführen, dass eine Verbindung der beiden Bleche durch eine Schmelzklebverbindung erfolgt. Hierzu wird der Klebstoff nur soweit erwärmt, dass er schmilzt aber noch nicht in wesentlichem Maße chemisch reagiert. Nach dem Abkühlen sind die Bleche handfest verbunden und lassen sich durch erneutes Erwärmen auch wieder voneinander lösen. Wenn die Verbindung nur im Form einer Schmelzklebverbindung ausgeführt wird, ist es auch möglich sie ganzflächig auszuführen. Hierbei sollte dann die Form soweit erwärmt sein, dass der Klebstoff beim Umformen wieder in den schmelzklebrigen Zustand kommt und somit fließfähig wird. Beim Abkühlen wird dann eine vollflächige Fixierklebung des Verbundes erhalten, welche in einem späteren thermischen Prozess ausgehärtet wird. Es ist auch denkbar, die beiden Bleche über eine geeignete Gestalt der Formpresse aneinander zu fixieren. Beispielweise kann die Matrize oder die Patrize der Presse Nischen aufweisen, in die ein Formblech eingelegt wird, so dass es ortsfest fixiert ist. Die so fixierte Blechstruktur wird anschließend umgeformt. Während des Umformvorgangs können die aneinanderliegenden Klebeflächen aneinander abgleiten, da die Klebeschicht nur mit einem der beiden Bauteile haftverbunden ist. Die freie Oberfläche der Klebeschicht ist derart passiv, dass sie über die Klebeschicht des anderen Bauteiles, also des Grundblechs bzw. der Platine gleiten kann. Erst nach dem Umformen wird der Blechverbund ausgehärtet. Dies erfolgt durch Erwärmen der Klebeschicht auf eine Temperatur, die ausreichend für die notwendige chemische Reaktion ausreichend hoch ist. Hierbei reagiert z.B. der Härter mit dem Epoxyd. Alternativ kann auch das Umformwerkzeug beheizt werden, wodurch bereits die Aushärtung erreicht werden kann oder zumindest eine Anhärtung. Dies hat den Vorteil, dass die Bauteile für die weitere Bearbeitung robuster sind.

Das zuvor beschriebene Verfahren lässt sich vorteilhaft in der Automobilfertigung anwenden. Dort werden komplex geformte Formteile in Leichtbauweise aus Blech benötigt. Die gesamte Karosserie wird nach Ihrem Zusammenbau in einem KTL-Prozessschritt erhitzt. Dieser Prozessschritt kann zur Aushärtung der Klebeverbindung mitbenutzt werden. Als Klebstoff kommt bevorzugt ein Strukturklebstoff in Betracht, der mit mehreren Härtungsmechanismen arbeitet, wie dies weiter oben beispielhaft beschrieben ist. Von besonderer Bedeutung ist dabei die nach Erstarren des insbesondere flüssig aufgetragenen Klebstoffs (Schmelze, wässrige Dispersion, Lösung oder dual cure reaktives Klebstoffsystem) trockene Oberfläche. Mit dem zuvor beschriebenen Verfahren lassen sich auch vollschichtig beschichtete Halbzeuge fertigen. Es handelt sich dabei um Bleche größerer Materialstärke, aus denen Versteifungsteile für Karosseriebleche (Platinen) ausgestanzt werden können. Diese dann ganzflächig beschichteten Verstärkungsbauteile werden dann in der zuvor beschriebenen Weise zunächst auf der Platine fixiert. Nach dem Umformen erfolgt das Aushärten, bei dem sich eine innige großflächige Verklebung zwischen den beiden Bauteilen einstellt. Das Halbzeug kann ein auf einem Coil gewickeltes Blech sein oder auch in Form von Tafeln zur Verfügung gestellt werden. Das Aufwickeln oder Stapeln des beschichteten Blechs ist möglich, da der applizierte Klebstoff nach seinem Erstarren eine vollständig trockene Oberfläche ausbildet.

Sobald der Klebstofffilm auf das Blech aufgebracht ist, trocknet er und bildet eine trockene Oberfläche. Dies erfolgt durch Verdampfung des die Dispersion beinhaltenden Wassers.

Das so gefertigte Blech wird auf einem Coil aufgewickelt und kann über längere Zeit bevorratet werden. Die Oberfläche der auf das Blech aufgetragenen Klebeschicht ist trocken und nicht haftend. Alternativ können die so gefertigten Bleche aber auch als Tafeln im Stapel übereinanderliegend bevorratet werden.

Zur Fertigung von Leichtbauformteilen wird das Blech vom Coil abgewickelt oder beschichtete Tafeln verwendet und durch Stanzen oder anderweitige Verfahren auf Form gebracht. Die so gefertigten Verstärkungsbleche werden dann in der beschriebenen Weise, bevorzugt punktuell mit einer Platine verbunden. Diese Fixierung erfolgt bevorzugt mit dem Widerstandspunktschweißen bzw. dem Clinchen und besonders bevorzugt über die schmelzklebenden Eigenschaften des vorapplizierten Klebstoffes. Es ist auch möglich die bereits ausgestanzten Blechteile mit dem Klebstoff zu beschichten. Dies erfolgt bevorzugt mit den Klebstoffvarianten, die in Form wässriger Dispersionen zur Verfügung gestellt werden durch tauchen oder sprühen.

Die sich beim Verformen relativ zueinander verschiebenden Flächenabschnitte vom Verstärkungsteil einerseits und Platine bzw. Grundplatte andererseits liegen im Wesentlichen lose aufeinander. Wegen der trockenen Oberfläche der Klebstoffschicht ist eine derartige Relativverlagerung möglich. Wird zur Fixierung der bei Raumtemperatur nicht klebende Klebstoff über seine Erweichungstemperatur aufgeheizt, bei welcher er eine schmelzklebende Eigenschaft entfaltet, ist eine Verschieblichkeit der verformten Flächenabschnitte ebenfalls möglich. Insbesondere ist diese Verschieblichkeit möglich, wenn die Erwärmung des schmelzklebende Eigenschaften entfaltenden Klebstoffs nur lokal erfolgt ist.

Alternativ zu dem vorbezeichneten Punktschweißfixieren oder dem punktuellen Druckfügen kann das Verstärkungsblech auch punktuell mit einem Laser erhitzt werden. Dort erweicht der aufgetragene Klebstoff und verbindet sich mit der gegenüberliegenden Klebefläche der Grundplatte. Es ist möglich, punktuell die Klebeschicht auch über die Reaktionstemperatur aufzuheizen. Dann härtet der Klebstoff punktuell sogar aus. Da dies in einem Bereich stattfindet, bei dem keine Relativverschiebung bei der Umformung stattfindet, wird der gesamte Umformprozess nicht beeinflusst.

Nach dem Umformen erfolgt die vollflächige Aushärtung der Klebeschicht, so dass die beiden Klebeflächen der beiden Bauteile großflächig über die gesamte Klebeschicht miteinander verbunden werden. Dies kann im Wege des Einzelaushärtens erfolgen bei der Automobilfertigung ist es jedoch erforderlich, zur Grundierung die gesamte zusammengebaute Karosserie zu erwärmen. Bei diesem Schritt kann die Aushärtung erfolgen.

Es wird als vorteilhaft angesehen, dass zufolge dieser Fertigung Werkzeugverschmutzungen durch flüssigen Klebstoff nicht mehr auftreten, da die Klebstoffapplikation auf den Halbzeuglieferanten verlagert werden kann. Es können verschiedenartige thermisch härtbare Thermoplasten verwendet werden. Die thermische Härtung kann eventuell erst nach einer UV-Aktivierung erfolgen.

### Beispiel 1

Bei dem EpiRez 3540-WY 35 (Hexion) handelt es sich um eine wässrige Dispersion eines festen Epoxidharzes. Diese wird mit dem als Härter verwendeten Dicyandiamid Pulver (Dyhard 100 SF, Alzchem) und den als Flexibilisator verwendeten Silikonnanopartikeln (Genioperl SLM P53, Wacker) gemischt und mit zusätzlichem Wasser auf die Gebrauchsviskosität verdünnt.

Die erhaltenen Dispersionen werden in 0,2 mm dicker Schicht auf 1 mm dickes Stahlblech DC10 aufgetragen und bei 100°C getrocknet. Die Bleche haben eine Breite von 25 mm und eine Länge von 100 mm. Nach dem Abkühlen ist das Stahlblech mit einer trockenen, klebfreien Klebstoffschicht versehen. Aus zwei dieser Bleche werden Zug-Scher-Proben in Anlehnung an DIN EN 1465 angefertigt, indem die Klebstoffseiten mit einer Überlappungslänge von 12,5 mm aufeinander gelegt werden. Die Bleche werden mit einem 120°C warmen Stahlstempel mit einer Masse von 2 kg für 5 s zusammen gedrückt. Nach dem Abkühlen ist eine handfeste Verbindung entstanden. Es erfolgt anschließend die Aushärtung für 30 min bei 180°C. Bei der folgenden Prüfung der Zug-Scher-Festigkeiten werden die in der Tabelle zusammen mit der Zusammensetzung der verschiedenen Klebstoffe dargestellten Festigkeiten erhalten. Mit jeder Klebstoffsorte werden 5 Proben präpariert.

| **Probenbezeichnung:** | Beispiel 1.1 | Beispiel 1.2 | Beispiel 1.3 |
|---|---|---|---|
| **Dyhard 100 SF** | 2,6 Teile | 2,6 Teile | 2,6 Teile |
| **Wasser** | 97,4 Teile | 97,4 Teile | 97,4 Teile |
| **EpiRez 3540-WY 35** | 100 Teile | 100 Teile | 100 Teile |
| **Genioperl SLM P53** | 50 Teile | 35 Teile | 20 Teile |
| **Zug-Scher-Festigkeit** | 5,5 ± 0,8 MPa | 10,0 ± 1,1 MPa | 12,5 ± 0,7 MPa |

### Beispiel 2

Es wird in gleicher Weise vorgegangen wie in Beispiel 1. Anstelle der Genioperls wird die Polyvinylbutyral-Dispersion Butvar BR (Solutia) als Flexibilisator verwendet. Die geprüften Zusammensetzungen und resultierenden Zug-Scher-Festigkeiten sind in folgender Tabelle zusammen gestellt:

| **Probenbezeichnung:** | Beispiel 2.1 | Beispiel 2.2 | Beispiel 2.3 |
|---|---|---|---|
| **Dyhard 100 SF** | 2,6 Teile | 2,6 Teile | 2,6 Teile |
| **Wasser** | 97,4 Teile | 97,4 Teile | 97,4 Teile |
| **EpiRez 3540-WY 35** | 100 Teile | 100 Teile | 100 Teile |
| **Butvar BR** | 100 Teile | 70 Teile | 40 Teile |
| **Zug-Scher-Festigkeit** | 9,2 ± 1 MPa | 10,0 ± 0,8 MPa | 9,5 ± 1,2 MPa |

### Beispiel 3

Es wird in gleicher Weise vorgegangen wie in Beispiel 1. Anstelle der Genioperls werden verschiedene Polyurethandispersionen von Bayer als Flexibilisator verwendet. Die geprüften Zusammensetzungen und resultierenden Zug-Scher-Festigkeiten sind in folgender Tabelle zusammen gestellt:

| **Probenbezeichnung:** | EP-U53-Dicy | EP-UKA8755-Dicy | EP-U42-Dicy |
|---|---|---|---|
| **Dyhard 100 SF** | 2,6 Teile | 2,6 Teile | 2,6 Teile |
| **Wasser** | 97,4 Teile | 97,4 Teile | 97,4 Teile |
| **EpiRez 3540-WY 55** | 100 Teile | 100 Teile | 100 Teile |
| **Dispercoll U53** | 100 Teile | | |
| **Dispercoll UKA8755** | | 100 Teile | |
| **Dispercoll U42** | | | 100 Teile |
| **Zug-Scher-Festigkeit** | 11,5 ± 1,9 MPa | 14,0 ± 1 MPa | 21,3 ± 1,4 MPa |

## Patentansprüche

1. Verfahren zur Herstellung einer Blechstruktur aus mindestens zwei miteinander verbundenen Blechen, wobei zumindest eines der Bleche mit einem mindestens ein Reaktivpolymer und einen Härter beinhaltenden Klebstoff beschichtet wird, danach die beiden Bleche zusammengelegt und aneinander fixiert werden, anschließend gemeinsam plastisch umgeformt werden und erst daran anschließend der die beiden Bleche miteinander verbindende Klebstoff endgültig ausgehärtet wird, **dadurch gekennzeichnet, dass** es sich bei dem Reaktivpolymer um ein bei 20°C festes Epoxidharz, insbesondere um ein epoxidiertes Phenolharz oder um einen Bisphenol-A-Diglycidylether oder um ein bei 20°C festes reaktives Polyurethan handelt und dass der Klebstoff eine wässrige Dispersion ist, die in wässriger Lösung aufgetragen wird und nach dem Trocknen eine bei 20°C tackfreie Oberfläche und ein schmelzklebriges Verhalten aufweist, und die Herstellung die beiden folgenden zeitlich und räumlich getrennten Schritte umfasst:
1. Fertigen eines Halbzeuges durch ganzflächiges Beschichten eines Bleches mit der Dispersion und Stapeln mehrerer derartiger beschichteter Tafeln mit nach dem Trocknen des Klebstoffes trockener Oberfläche aufeinander oder Aufwickeln eines derartig beschichteten Bleches mit der nach dem Trocknen des Klebstoffes trockenen Oberfläche zu einem Coil;
2. Abwickeln des Bleches vom Coil oder Verwendung der Tafel zur Fertigung der Blechstruktur durch Fixieren eines aus der Tafel oder dem Coil geformten Bleches auf einer Gegenklebefläche eines anderen Bleches, anschließendes Umformen und thermisches Aushärten des Klebstoffes.

2. Verfahren nach Anspruch 1, **dadurch gekennzeichnet, dass** die beiden Bleche vor dem Umformen lediglich punktuell, insbesondere dort, wo beim Umformen eine minimale Relativbewegung erfolgt, aneinander fixiert werden.

3. Verfahren nach Anspruch 2, **dadurch gekennzeichnet, dass** die beiden Bleche anderweitig als über die Klebstoffschicht, insbesondere mittels eines Schweißpunktes, bevorzugt mittels Widerstandspunktschweißen oder einer besonderen Gestaltung einer Pressform einer Umformpresse vor der plastischen Umformung aneinander fixiert werden.

4. Verfahren nach Anspruch 2, **dadurch gekennzeichnet, dass** die beiden Bleche durch insbesondere lokale Teilaushärtung der Klebstoffschicht aneinander fixiert werden.

5. Verfahren nach einem der vorhergehenden Ansprüche 1, 2 oder 4, **dadurch gekennzeichnet, dass** die Fixierung der Bleche aneinander aufgrund der schmelzklebrigen Eigenschaften des vorapplizierten Klebstoffes lokal oder vollflächig erfolgt.

6. Verfahren nach einem der vorhergehenden Ansprüche, **dadurch gekennzeichnet, dass** die Umformung des Blechbauteiles nach dem Zusammenlegen der Bleche und gegebenenfalls lokaler oder vollflächiger Fixierung durch Tiefziehen, Biegen oder Pressen erfolgt.

7. Verfahren nach einem der vorhergehenden Ansprüche, **dadurch gekennzeichnet, dass** das Umformen thermisch unterstützt wird und hierbei der Klebstoff zumindest teilweise chemisch aushärtet.

## Claims

1. Method for producing a sheet metal structure from at least two interconnected metal sheets, at least one of the metal sheets being coated with an adhesive which contains at least one reactive polymer and a curing agent, and the two metal sheets subsequently being placed together, fixed to one another and then plastically shaped together, the adhesive which interconnects the two metal sheets being finally cured only thereafter, **characterised in that** the reactive polymer is an epoxy resin which is solid at 20°C, in particular an epoxidised phenolic resin, a bisphenol A diglycidyl ether or a reactive polymer which is solid at 20°C, and **in that** the adhesive is an aqueous dispersion applied in an aqueous solution, has a surface which is tack-free at 20°C after drying, and behaves like a hot-melt adhesive, and the production comprises the following two temporally and spatially separate steps:
1. manufacturing a semi-finished product by coating the entire surface of a metal sheet with the dispersion, and stacking a plurality of coated metal plates of this kind, having dry surfaces after the adhesive has dried, on top of one another, or winding a metal sheet that has been coated in this way and has a dry surface after the adhesive has dried, into a coil;
2. unwinding the metal sheet from the coil or using the metal plate for manufacturing the sheet metal structure, by fixing a metal sheet formed from the metal plate or from the coil to an opposing adhesive surface of another metal sheet, and subsequently shaping said structure and thermally curing the adhesive.

2. Method according to claim 1, **characterised in that** before being shaped, the two metal sheets are fixed to one another only at points, in particular where minimal relative movement takes place during shaping.

3. Method according to claim 2, **characterised in that**, before the plastic shaping, the two metal sheets are fixed to one another by means other than the adhesive layer, in particular by a spot weld, preferably by resistance spot welding or a particular design of a press mould of a shaping press.

4. Method according to claim 2, **characterised in that** the two metal sheets are fixed to one another by in particular local partial curing of the adhesive layer.

5. Method according to any of the preceding claims 1, 2 or 4, **characterised in that** the metal sheets are fixed to one another locally or across the entire surface thereof, due to the hot-melt adhesive characteristics of the previously applied adhesive.

6. Method according to any of the preceding claims, **characterised in that** the shaping of the sheet metal component is carried out by means of deep-drawing, bending or pressing, after the metal sheets have been placed together and optionally fixed locally or across the entire surface thereof.

7. Method according to any of the preceding claims, **characterised in that** the shaping is thermally assisted and the adhesive is cured chemically at least in part.

## Revendications

1. Procédé de fabrication d'une structure en tôle à partir d'au moins deux tôles liées entre elles, dans lequel au moins l'une des tôles est revêtue avec un adhésif contenant au moins un polymère réactif et un durcisseur, puis les deux tôles sont réunies et fixées ensemble, puis les deux tôles sont conjointement déformées de manière plastique, et seulement ensuite l'adhésif liant les deux tôles ensemble est définitivement durci, **caractérisé en ce que** le polymère réactif est une résine époxyde solide à 20°C, en particulier une résine phénolique époxydée ou un éther diglycidylique de bisphénol A ou un polyuréthane réactif solide à 20°C, et **en ce que** l'adhésif est une dispersion aqueuse qui est appliquée en solution aqueuse et, après séchage, présente une surface non adhérente à 20°C, ainsi qu'un comportement adhérent à l'état fondu, et la fabrication comporte les deux étapes suivantes séparées dans le temps et dans l'espace :
1. fabriquer un produit semi-fini en revêtant toute la surface d'une tôle avec la dispersion et en empilant plusieurs de ces plaques revêtues, avec leur surface sèche par suite au séchage de l'adhésif, les unes sur les autres ou en enroulant une telle tôle revêtue, avec la surface sèche par suite au séchage de l'adhésif, en une bobine ;
2. dérouler la tôle de la bobine ou utiliser la plaque pour fabriquer la structure en tôle par fixation d'une tôle formée par la plaque ou par la bobine sur une contre-surface de collage d'une autre tôle, puis déformation et durcissement thermique de l'adhésif.

2. Procédé selon la revendication 1, **caractérisé en ce que** les deux tôles, avant d'être déformées, sont fixées ensemble seulement de manière ponctuelle, en particulier là où un mouvement relatif minimal survient pendant la déformation plastique.

3. Procédé selon la revendication 2, **caractérisé en ce que**, avant la déformation plastique, les deux tôles sont fixées ensemble autrement que par la couche d'adhésif, en particulier au moyen d'un point de soudure, de préférence par soudage par résistance par points, ou d'une configuration particulière d'un moule d'une presse de formage.

4. Procédé selon la revendication 2, **caractérisé en ce que** les deux tôles sont fixées ensemble par un durcissement partiel, en particulier local, de la couche d'adhésif.

5. Procédé selon l'une des revendications précédentes 1, 2 ou 4, **caractérisé en ce que** la fixation des tôles ensemble s'effectue localement ou sur toute la surface en raison des propriétés d'adhérence à l'état fondu de l'adhésif pré-appliqué.

6. Procédé selon l'une des revendications précédentes, **caractérisé en ce que** la déformation plastique de la pièce en tôle survient après la réunion des tôles et, le cas échéant, la fixation locale ou sur toute la surface par emboutissage, pliage ou pressage.

7. Procédé selon l'une des revendications précédentes, **caractérisé en ce que** la déformation plastique est assistée thermiquement, et que, ce faisant, l'adhésif durcit chimiquement au moins partiellement.
